(19) Europäisches Patentamt / European Patent Office / Office européen des brevets

(11) **EP 3 480 260 B1**

(12) **EUROPEAN PATENT SPECIFICATION**

(45) Date of publication and mention
of the grant of the patent:
**27.04.2022 Bulletin 2022/17**

(21) Application number: **17863006.7**

(22) Date of filing: **03.04.2017**

(51) International Patent Classification (IPC):
**C08L 101/00** *(2006.01)* **C08J 5/04** *(2006.01)*
**C08K 7/06** *(2006.01)* **C08K 7/14** *(2006.01)*
**C08L 23/00** *(2006.01)* **C08L 77/00** *(2006.01)*
**C08L 23/06** *(2006.01)* **C08L 23/12** *(2006.01)*
**B29C 45/00** *(2006.01)*

(52) Cooperative Patent Classification (CPC):
(C-Sets available)
**C08J 5/04; C08J 5/042; C08J 5/043; C08J 5/047;
C08K 7/06; C08K 7/14; C08L 23/00; C08L 23/06;
C08L 23/12; C08L 77/00; C08L 101/00;**
C08J 2323/06; C08J 2323/12; C08J 2423/26;
C08J 2477/00 (Cont.)

(86) International application number:
**PCT/JP2017/013996**

(87) International publication number:
**WO 2018/073993 (26.04.2018 Gazette 2018/17)**

(54) **RESIN COMPOSITION AND MOLDED RESIN OBJECT**

HARZZUSAMMENSETZUNG UND HARZFORMKÖRPER

COMPOSITION DE RÉSINE ET OBJET EN RÉSINE MOULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2016 JP 2016206983**

(43) Date of publication of application:
**08.05.2019 Bulletin 2019/19**

(73) Proprietor: **FUJIFILM Business Innovation Corp.
Minato-ku
Tokyo (JP)**

(72) Inventors:
• **OKOSHI Masayuki
Minamiashigara-shi
Kanagawa 250-0111 (JP)**
• **MORIYA Hiroyuki
Minamiashigara-shi
Kanagawa 250-0111 (JP)**
• **MIYAMOTO Tsuyoshi
Minamiashigara-shi
Kanagawa 250-0111 (JP)**

(74) Representative: **Haseltine Lake Kempner LLP
Bürkleinstrasse 10
80538 München (DE)**

(56) References cited:
WO-A1-2015/173156   JP-A- S5 767 658
JP-A- H04 153 257   JP-A- 2003 528 956
JP-A- 2008 150 485   JP-A- 2008 179 753
JP-A- 2009 532 574   JP-A- 2010 155 993
JP-A- 2013 166 922   JP-A- 2014 234 503
JP-A- 2016 074 779   JP-A- 2016 138 163

• **Jürgen Falde: "Römp Chemie Lexikon" In: "Römp
Chemie Lexikon", 20 February 1995 (1995-02-20),
XP055672328, pages 3559-3559,**

**(Cont. next page)**

(52) Cooperative Patent Classification (CPC): (Cont.)

C-Sets
**C08L 23/06;**
**C08L 23/12**

## Description

Technical Field

The present invention relates to a resin composition and a resin molded body.

Background Art

Conventionally, resin compositions have been provided and used for various purposes.

Particularly, resin compositions containing thermoplastic resins are used for components such as household electric appliances, various components of automobiles, casings, or casings of office equipment and electronic/electric appliances or the like.

For example, Patent Literature 1 discloses "a long fiber reinforced polyolefin structure having a length of 3 mm or more, containing: (a) 0.1 wt% to 90 wt% of at least one type of polyolefin; (b) 0.1 wt% to 50 wt% of at least one type of polyamide; (c) 0.1 wt% to 15 wt% of at least one type of modified polyolefin; (d) 5.0 wt% to 75 wt% of at least one type of reinforcing fiber; and (e) 0.1 wt% to 10 wt% of at least one sulfur-containing additive".

In addition, Patent Literature 2 discloses "a modifier for a polyolefin resin, containing a polymer (X), the polymer (X) containing an acid-modified polyolefin (A) block and a polyamide (B) block, and a ratio ($\alpha$), measured by $^{13}$C-NMR, of carbon derived from an amide group to carbon derived from a methyl group, a methylene group and a methine group is 0.5/99.5 to 12/88". Further, Patent Literature 2 discloses "an inorganic fiber-containing polyolefin resin composition containing the polyolefin resin modifier (K), the polyolefin resin (D) and the inorganic fiber (E)."

Patent Literature 3 discloses "a thermoplastic resin molded product containing carbon fibers, wherein the carbon fibers contained in the molded body have a total content of 0.5 wt% to 30 wt%, and carbon fibers having a length of more than 1.5 mm are 0.1 wt% to 4.7 wt%".

Patent Literature 4 discloses a molded article containing a semi-aromatic polyamide resin composition containing 20 to 60 parts by mass of a semi-aromatic polyamide resin (A), 5-30 parts by mass of a semiaromatic polyamide resin (B), 1 to 30 parts by mass of a modified olefin polymer (C) and 0 to 60 parts by mass of a fibrous filler (D), wherein the fibrous filler can a mixture of glass fibers and carbon fibers.

Citation List

Patent Literature

    Patent Literature 1: JP-T-2003-528956
    Patent Literature 2: JP-A-2014-181307
    Patent Literature 3: JP-A-2000-071245
    Patent Literature 4: JP-A- 2016-138163

Summary of Invention

Technical Problem

Technical Problem of the present invention is to provide a resin composition capable of obtaining a resin molded body excellent in toughness and flexural modulus compared with a case where in a thermoplastic resin containing a thermoplastic resin, reinforcing fibers, a resin containing at least one of an amide bond and an imide bond, and a compatibilizer, the reinforcing fibers are only carbon fibers.

Solution to Problem

The above problem is achieved by the following aspects of the present invention.
[1] At least one aspect of the present invention relates to a resin composition, containing:
a thermoplastic resin being a polyethylene or polypropylene, carbon fibers, glass fibers, a polyamide, and a compatibilizer being a polyolefin modified with maleic anhydride; wherein an average fiber length of the carbon fibers is 0.1 mm to 5.0 mm; the polyamide is a polyamide having a structural unit containing an aromatic ring other than an aramid, a polyamide having a structural unit not containing an aromatic ring, or a polyamide having a structural unit containing an aromatic ring other than an aramid structural unit and a structural unit not containing an aromatic ring; and a content of the polyamide is 0.1 part by mass to 100 parts by mass with respect to 100 parts by mass of the thermoplastic resin.

[2] In the resin composition according to [1],

a mass ratio $W^C/W^G$ of a content $W^C$ of the carbon fibers to a content $W^G$ of the glass fibers may be 0.01 to 100.

[3] In the resin composition according to [1] or [2],

a content of the carbon fibers may be 0.1 part by mass to 200 parts by mass with respect to 100 parts by mass of the thermoplastic resin.

[4] In the resin composition according to any one of [1] to [3],

a content of the glass fibers may be 0.1 part by mass to 200 parts by mass with respect to 100 parts by mass of the thermoplastic resin.

[5] In the resin composition according to any one of [1] to [4],

an average fiber length of the glass fibers may be 0.1 mm to 2.0 mm.

[6] In the resin composition according to any one of [1] to [5],

a content of the compatibilizer may be 0.1 part by mass to 50 parts by mass with respect to 100 parts by mass of the thermoplastic resin.

[7] In the resin composition according to any one of [1] to [6],

the content of the polyamide may be 0.1 mass% to 1,000 mass% with respect to a total mass of the carbon fibers and the glass fibers.

[8] In the resin composition according to any one of [1] to [7],

the content of the compatibilizer may be 1 mass% to 50 mass% with respect to the total mass of the carbon fibers and the glass fibers.

[9] Another aspect of the present invention relates to a resin molded body, comprising the resin composition according to any one of [1] to [8].

[10] In the resin molded body according to [9],

a mass ratio $W^C/W^G$ of a content $W^C$ of the carbon fibers to a content $W^G$ of the glass fibers may be 0.01 to 100.

[11] In the resin molded body according to [9] or [10],

a content of the carbon fibers may be 0.1 part by mass to 200 parts by mass with respect to 100 parts by mass of the thermoplastic resin.

[12] In the resin molded body according to any one of [9] to [11],

a content of the glass fibers may be 0.1 part by mass to 200 parts by mass with respect to 100 parts by mass of the thermoplastic resin.

[13] In the resin molded body according to any one of [9] to [12],

an average fiber length of the glass fibers may be 0.1 mm to 2.0 mm.

[14] In the resin molded body according to any one of [9] to [13],

a content of the compatibilizer may be 0.1 part by mass to 50 parts by mass with respect to 100 parts by mass of the thermoplastic resin.

[15] In the resin molded body according to any one of [9] to [14],

the content of the polyamide may be 0.1 mass% to 1,000 mass% with respect to a total mass of the carbon fibers and the glass fibers.

[16] In the resin molded body according to any one of [9] to [15],

the content of the compatibilizer may be 1 mass% to 50 mass% with respect to the total mass of the carbon fibers and the glass fibers.

Advantageous Effects of Invention

According to the viewpoint of [1], a resin composition capable of obtaining a resin molded body excellent in toughness and flexural modulus can be provided, compared with a case where in a thermoplastic resin containing a thermoplastic resin, reinforcing fibers, a resin containing at least one of an amide bond and an imide bond, and a compatibilizer, the reinforcing fibers are only carbon fibers.

According to the viewpoint of [2], a resin composition capable of obtaining a resin molded body more excellent in toughness and flexural modulus can be provided, compared with a case where the mass ratio $W^C/W^G$ of the content $W^C$ of the carbon fibers to the content $W^G$ of the glass fibers is less than 0.01 or more than 100.

According to the viewpoint of [3], a resin composition capable of obtaining a resin molded body more excellent in flexural modulus can be provided, compared with a case where the content of the carbon fibers is less than 0.1 part by mass or more than 200 parts by mass with respect to 100 parts by mass of the thermoplastic resin.

According to the viewpoint of [1], a resin composition capable of obtaining a resin molded body more excellent in flexural modulus can be provided, compared with a case where the average fiber length of the carbon fibers is less than 0.1 mm or more than 5.0 mm.

According to the viewpoint of [5], a resin composition capable of obtaining a resin molded body more excellent in flexural modulus can be provided, compared with a case where the average fiber length of the glass fibers is less than 0.1 mm or more than 2.0 mm.

According to the viewpoint of [4], a resin composition capable of obtaining a resin molded body more excellent in toughness and flexural modulus can be provided, compared with a case where the content of the glass fibers is less than 0.1 part by mass or more than 200 parts by mass with respect to 100 parts by mass of the thermoplastic resin.

According to the viewpoint of [1], a resin composition capable of obtaining an inexpensive resin molded body can be provided, compared with a case where an acrylonitrile butadiene styrene copolymer or a general resin of a styrene polymer is used as the thermoplastic resin.

According to the viewpoint of [1], a resin composition capable of obtaining a resin molded body more excellent in flexural modulus can be obtained, compared with a case where an imidazole is used as the resin containing at least one of an amide bond and an imide bond.

According to the viewpoint of [1], a resin composition capable of obtaining a resin molded body more excellent in toughness and flexural modulus can be provided, compared with a case where an epoxy copolymer is used as the compatibilizer.

According to the viewpoint of [1], a resin composition capable of obtaining a resin molded body more excellent in flexural modulus can be provided, compared with a case where the content of the polyamide is less than 0.1 part by mass or more than 100 parts by mass with respect to 100 parts by mass of the thermoplastic resin.

According to the viewpoint of [6], a resin composition capable of obtaining a resin molded body more excellent in flexural modulus can be provided, compared with a case where the content of the compatibilizer is less than 0.1 part by mass or more than 50 parts by mass with respect to 100 parts by mass of the thermoplastic resin.

According to the viewpoint of [7], a resin composition capable of obtaining a resin molded body excellent in toughness and flexural modulus can be provided, compared with a case where the content of the resin containing at least one of an amide bond and an imide bond is less than 1 mass% or more than 1,000 mass% with respect to the total mass of the carbon fibers and the glass fibers.

According to the viewpoint of [8], a resin composition capable of obtaining a resin molded body excellent in toughness and flexural modulus can be provided, compared with a case where the content of the compatibilizer is less than 1 mass% or more than 50 mass% with respect to the total mass of the carbon fibers and the glass fibers.

According to the viewpoint of [9], a resin molded body excellent in toughness and flexural modulus can be provided, compared with a case where a resin composition containing a thermoplastic resin, reinforcing fibers, a resin containing at least one of an amide bond and an imide bond, and a compatibilizer is used, and the reinforcing fibers are only carbon fibers.

According to the viewpoint of [10], a resin molded body more excellent in toughness and flexural modulus can be provided, compared with a case where the mass ratio $W^C/W^G$ of the content $W^C$ of the carbon fibers to the content $W^G$ of the glass fibers is less than 1 or more than 100.

According to the viewpoint of [11], a resin molded body more excellent in flexural modulus can be provided, compared with a case where the content of the carbon fibers is less than 0.1 part by mass or more than 200 parts by mass with respect to 100 parts by mass of the thermoplastic resin.

According to the viewpoint of [12], a resin molded body more excellent in toughness and flexural modulus can be provided, compared with a case where the content of the glass fibers is less than 0.1 part by mass or more than 200 parts by mass with respect to 100 parts by mass of the thermoplastic resin.

According to the viewpoint of [9], a resin molded body more excellent in flexural modulus can be provided, compared with a case where the average fiber length of the carbon fibers is less than 0.1 mm or more than 5.0 mm.

According to the viewpoint of [13], a resin molded body more excellent in flexural modulus can be provided, compared with a case where the average fiber length of the glass fibers is less than 0.1 mm or more than 2.0 mm.

According to the viewpoint of [9], an inexpensive resin molded body can be provided, compared with a case where an acrylonitrile butadiene styrene copolymer or a general resin of a styrene polymer is used as the thermoplastic resin.

According to the viewpoint of [9], a resin molded body more excellent in flexural modulus can be obtained, compared with a case where an imidazole is used as the resin containing at least one of an amide bond and an imide bond.

According to the viewpoint of [9], a resin molded body more excellent in flexural modulus can be provided, compared with a case where an epoxy copolymer is used as the compatibilizer.

According to the viewpoint of [9], a resin molded body more excellent in flexural modulus can be provided, compared with a case where the content of the resin containing at least one of an amide bond and an imide bond is less than 0.1 part by mass or more than 100 parts by mass with respect to 100 parts by mass of the thermoplastic resin.

According to the viewpoint of [14], a resin molded body more excellent in flexural modulus can be provided, compared with a case where the content of the compatibilizer is less than 0.1 part by mass or more than 50 parts by mass with respect to 100 parts by mass of the thermoplastic resin.

According to the viewpoint of [15], a resin molded body excellent in toughness and flexural modulus can be provided, compared with a case where the content of the resin containing at least one of an amide bond and an imide bond is less than 0.1 mass% or more than 1,000 mass% with respect to the total mass of the carbon fibers and the glass fibers.

According to the viewpoint of [16], a resin molded body excellent in toughness and flexural modulus can be provided, compared with a case where the content of the compatibilizer is less than 1 mass% or more than 50 mass% with respect to the total mass of the carbon fibers and the glass fibers.

Brief Description of Drawings

Fig. 1 is a pattern diagram for describing an example of the main part of the resin molded body according to the present embodiment.
Fig. 2 is a pattern diagram of a test using a micro-droplet method.

Description of Embodiments

Hereinafter, embodiments which are examples of a resin composition and a resin molded body of the present invention are described.

[Resin Composition]

The resin composition according to the present embodiment contains a thermoplastic resin, carbon fibers, glass fibers, a polyamide, and a compatibilizer as defined in claim 1.

Hereinafter, the polyamide may be referred to as a "specific resin".

In recent years, in order to obtain a resin molded body excellent in mechanical strength, a resin composition containing a thermoplastic resin as a base material (matrix) and reinforcing fibers are used.

In such a resin composition, when the affinity between the reinforcing fiber and the thermoplastic resin is low, a space is formed at the interface therebetween, and the adhesion at this interface sometimes decreases.

Particularly in a case where carbon fibers are used as reinforcing fibers in the resin composition, high mechanical strength is required as compared with glass fibers, so that a decrease in adhesion at the interface between the carbon fibers and the thermoplastic resin may cause a reduction in mechanical strength, particularly the flexural modulus.

In addition, in case where only carbon fibers are used as reinforcing fibers in the resin composition, the resulting resin molded body is excellent in mechanical strength, but on the other hand, the toughness of the resin molded body may deteriorate.

Therefore, the resin composition according to the present embodiment contains five components including: a thermoplastic resin; carbon fibers; glass fibers; a specific resin; and a compatibilizer.

Due to this configuration, a resin molded body excellent in toughness and flexural modulus can be obtained. Although the effect of obtaining such an effect is unclear, it is presumed as follows.

In obtaining a resin molded body from the resin composition according to the present embodiment, when the resin composition is heat-molten and mixed, the thermoplastic resin as the base material and the compatibilizer are melted, a part of the compatibilizer in the molecule and the amide bond and the imide bond contained in the molecule of the specific resin are compatible with each other and the specific resin is dispersed in the resin composition.

In this state, when the specific resin is in contact with the reinforcing fibers and the glass fibers (hereinafter collectively referred to as "reinforcing fibers" unless otherwise specified), amide bonds and imide bonds contained in a large number along the molecular chain of the specific resin and polar groups slightly present on the surface of the carbon fibers physically adhere at a plurality of sites with affinity (attraction force and hydrogen bonds). In addition, since the thermoplastic resin and the specific resin are generally less compatible, the frequency of contact between the specific resin and the reinforcing fibers increases by the repulsive force between the thermoplastic resin and the specific resin, and as a result, the adhesion amount and adhesion area of the specific resin to the reinforcing fibers increase. Accordingly, a coating layer of the specific resin is formed around the reinforcing fibers.

Further, the specific resin forming the coating layer is also compatible with a part of reactive groups in the molecule of the compatibilizer due to a chemical reaction and electrostatic interaction between polar groups, so that the compatibilizer is also compatible with the thermoplastic resin, thereby the attractive force and the repulsive force are in equilibrium state, and the coating layer formed by the specific resin is formed in a thin and nearly uniform state. Particularly, since the affinity between the carboxy group present on the surface of the reinforcing fibers and the amide bond or the imide bond contained in the molecule of the specific resin is high, the coating layer of the specific resin is easily to be formed around the reinforcing fibers, and the coating layer is considered to be a thin film having excellent uniformity.

Although it is preferable that the entire circumference of the reinforcing fibers is coated by the coating layer, there may be a portion which is not partially coated.

Further, when the glass fibers are contained, the carbon fibers having the coating layer of the specific resin is coordinated around the glass fibers, and fiber directions thereof are oriented and are present in the resin molded body. When contained in the resin molded body in the state where the carbon fibers are present around the glass fibers, the carbon fibers and the glass fibers have a synergistic effect, and a resin molded body excellent in both toughness and flexural modulus can be obtained.

It is presumed from the above that the resin composition according to the present embodiment can obtain a resin molded body excellent in toughness and flexural modulus.

Here, in the resin composition according to the present embodiment and the resin molded body obtained therefrom, it is preferable that a coating layer of the specific resin is formed around the carbon fibers by heat-melt-kneading and injection molding in production of the resin composition (for example, pellets), and the coating layer has a thickness of 5 nm to 700 nm.

In the resin composition according to the present embodiment, the thickness of the coating layer of the specific resin is 5 nm to 700 nm, and is preferably 10 nm to 650 nm from the viewpoint of further improvement of the flexural modulus. When the thickness of the coating layer is 5 nm or more (particularly 10 nm or more), the flexural modulus is improved; when the thickness of the coating layer is 700 nm or less, the interface between the carbon fibers and the thermoplastic resin can be prevented from becoming brittle via the coating layer and the reduction in flexural modulus can be suppressed.

The thickness of the coating layer is a value measured by the following method. An object to be measured is broken in liquid nitrogen, and the cross section thereof is observed using an electron microscope (VE-9800 manufactured by Keyence Corporation). On the cross section, the thickness of the coating layer to be coated around the carbon fibers is measured at 100 points, and an average value is calculated.

The coating layer is confirmed by observing the above cross section.

In the resin composition (and the resin molded body thereof) according to the present embodiment, for example, a configuration is preferably adopted in which the compatibilizer is partially dissolved between the coating layer formed by the specific resin around the carbon fibers and the thermoplastic resin.

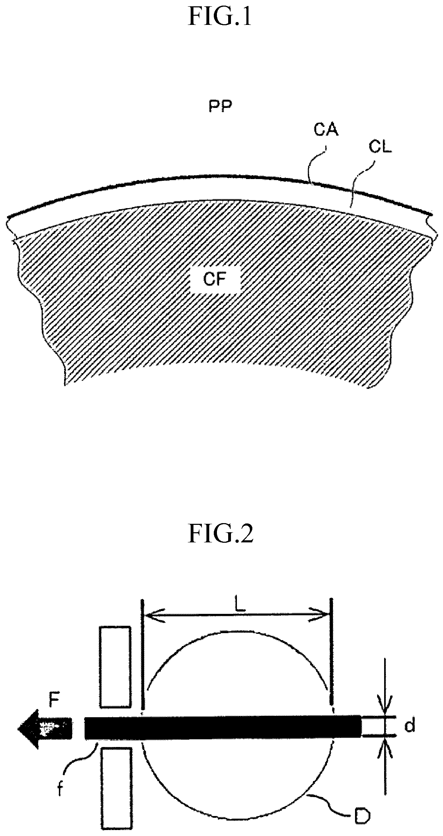

Specifically, for example, a layer of the compatibilizer is preferably interposed between the coating layer of the specific resin and the thermoplastic resin as a base material (see Fig. 1). That is, a layer of the compatibilizer is formed on the surface of the coating layer, and the coating layer and the thermoplastic resin are preferably adjacent to each other via the layer of the compatibilizer. The layer of the compatibilizer is formed to be thinner than the coating layer, and due to the interposition of the layer of the compatibilizer, the adhesion (adhesiveness) between the coating layer and the thermoplastic resin is enhanced and a resin molded body excellent in mechanical strength, particularly the flexural modulus, can be easily obtained. In Fig. 1, PP represents a thermoplastic resin, CF represents a carbon fiber, CL represents a coating layer, and CA represents a layer of a compatibilizer.

Particularly, the compatibilizer layer is preferably interposed between the coating layer and the thermoplastic resin in a state of being bonded to the coating layer (via a hydrogen bond, a covalent bond by a reaction of functional groups of the compatibilizer and the specific resin, or the like) and compatible with the thermoplastic resin. This configuration is easily realized, for example, when a compatibilizer having the same structure or compatible structure as the thermoplastic resin as a base material and containing a site reactive with the above-mentioned functional groups of the specific resin in a part of the molecule is applied as the compatibilizer.

Specifically, for example, in a case where a polyolefin as the thermoplastic resin, a polyamide as the specific resin, and a maleic anhydride modified polyolefin as the compatibilizer are applied, it is preferable that in a layer of the maleic anhydride modified polyolefin (a layer of the compatibilizer), a carboxy group formed by ring opening of a maleic anhydride site reacts to bind with an amine residue of the layer of the polyamide (coating layer), and the polyolefin site is interposed in a compatible state with the polyolefin.

Here, a method for confirming that the layer of the compatibilizer is interposed between the coating layer and the thermoplastic resin is as follows.

An infrared spectroscopic analyzer (NICOLET 6700 FT-IR, manufactured by Thermo Fisher Scientific Inc.) is used as an analyzer. For example, in a case of a resin composition (or a resin molded body) of polypropylene (hereinafter referred to as PP) as a thermoplastic resin, PA 66 as a specific resin, and maleic modified polypropylene (hereinafter referred to as MA-PP) as a modified polyolefin, IR spectra of mixtures thereof, a mixture of PP and PA 66, a mixture of PP and MA-PP, a PP simple substance as a reference, a PA 66 simple substance, a simple substance of MA-PP are obtained by a KBr tablet method, and the peak areas derived from acid anhydride (peak characteristic to MA-PP) in the mixture ranging from a wave number of 1,750 cm$^{-1}$ to 1,820 cm$^{-1}$ are comparatively analyzed. In the mixture of PP, PA 66, and MA-PP, the decrease of the acid anhydride peak area are confirmed and it is thus confirmed that MA-PP and PA 66 react with each other. Accordingly, it can be confirmed that the layer of the compatibilizer (binding layer) is interposed between the covering layer and the thermoplastic resin. In detail, when MA-PP is reacted with PA 66, the cyclic maleation moiety of MA-PP opens to chemically bond the amine residues of PA 66, thereby reducing the cyclic maleation moiety, so that it can be confirmed that the layer of the compatibilizer (binding layer) is interposed between the coating layer and the thermoplastic resin.

Hereinafter, details of each component of the resin composition according to the present embodiment are described.

-Thermoplastic Resin-

The thermoplastic resin is a base material of the resin composition and refers to a resin component reinforced by carbon fibers and glass fibers (also referred to as a matrix resin).

The thermoplastic resin is a polyolefin (PO) selected from polyethylene or polypropylene.

The thermoplastic resin may be used alone, or may be used in combination of two or more thereof.

The polyolefin (PO) is preferred from the viewpoint of further improvement of the flexural modulus and of the cost.

The polyolefin may be a resin containing a repeating unit derived from an olefin selected from ethylene or propylene and may contain a repeating unit derived from a monomer other than the olefin as long as it is not more than 30 mass% with respect to the whole resin.

The polyolefin can be obtained by addition polymerization of an olefin (if necessary, a monomer other than the olefin).

The monomer other than the olefin to obtain the polyolefin may be one kind or two or more kinds, respectively.

The polyolefin may be a copolymer or a homopolymer. In addition, the polyolefin may be linear or branched.

The olefin includes an $\alpha$-olefin selected from ethylene and propylene.

Of these, the propylene is particularly preferred, from the viewpoint of the cost.

As the monomer other than the olefin, a known addition polymerizable compound is selected.

Examples of the addition polymerizable compound include: styrenes such as styrene, methylstyrene, $\alpha$-methyl styrene, $\beta$-methylstyrene, t-butylstyrene, chlorostyrene, chloromethylstyrene, methoxystyrene, styrenesulfonic acid or a salt thereof; (meth)acrylates such as alkyl (meth)acrylate, benzyl (meth)acrylate and dimethylaminoethyl (meth)acrylate; halovinyls such as vinyl chloride; vinyl esters such as vinyl acetate and vinyl propionate; vinyl ethers such as vinyl methyl ether; vinylidene halides such as vinylidene chloride; N-vinyl compounds such as N-vinyl pyrrolidone; or the like.

Of these, a resin containing only repeating units derived from an olefin is preferred, and particularly from the viewpoint of the cost, the polypropylene is preferred.

The molecular weight of the thermoplastic resin is not particularly limited, and may be determined according to the type of the resin, molding conditions, the application of the resin molded body, or the like. For example, if the thermoplastic resin is a polyolefin, the weight average molecular weight (Mw) thereof is preferably in the range of 10,000 to 300,000, and more preferably in the range of 10,000 to 200,000.

In addition, similar to the above molecular weight, the glass transition temperature (Tg) or the melting point (Tm) of the thermoplastic resin is not particularly limited, and may be determined according to the kind of the resin, molding conditions, the application of the resin molded body, or the like. For example, if the thermoplastic resin is a polyolefin, the melting point (Tm) thereof is preferably in the range of 100°C to 300°C, and more preferably in the range of 150°C to 250°C.

The weight average molecular weight (Mw) and the melting point (Tm) of the polyolefin are values measured as follows.

That is, the weight average molecular weight (Mw) of the polyolefin is determined by gel permeation chromatography (GPC) under the following conditions. A high temperature GPC system "HLC-8321 GPC/HT (manufactured by Tosoh Corporation)" is used as a GPC device, and o-dichlorobenzene is used as an eluent. The polyolefin is melted and filtered into the o-dichlorobenzene at a high temperature (a higher temperature of 140°C to 150°C), and the filtrate is used as a measurement sample. As measurement conditions, the sample concentration is 0.5%, the flow rate is 0.6 ml/min, and the sample injection volume is 10 $\mu$l. The measurement is performed using a differential refractive index (RI) detector. In addition, a calibration curve is prepared from 10 samples of "polystylene standard sample TSK standard" manufactured by Tosoh Corporation: "A-500", "F-1", "F-10", "F-80", "F-380", "A-2500", "F-4", "F-40", "F-128", and "F-700".

The melting temperature (Tm) of the polyolefin is obtained by the "melting peak temperature" described in the method of obtaining the melting temperature of JIS K 7121-1987 "Method for Measuring Transition Temperature of Plastics", from a DSC curve obtained by differential scanning calorimetry (DSC).

The content of the thermoplastic resin may be determined according to the application of the resin molded body or the like, and is, for example, preferably 5 mass% to 95 mass%, more preferably 10 mass% to 95 mass%, and further preferably 20 mass% to 95 mass%, with respect to the total mass of the resin composition.

In a case where a polyolefin is used as the thermoplastic resin, it is preferable to use the polyolefin in an amount of 20 mass% or more with respect to the total mass of the thermoplastic resin.

-Carbon Fibers-

As the carbon fibers, a known carbon fiber is used, and both a PAN-based carbon fiber and a pitch-based carbon fiber are used.

The carbon fibers may be one subjected to known surface treatment.

Examples of the surface treatment for the carbon fibers include oxidation treatment and sizing treatment.

The form of the carbon fibers is not particularly limited, and may be selected according to the application of the resin molded body or the like. Examples of the form of the carbon fibers include a fiber bundle composed of a large number of single fibers, a bundled fiber bundle, a woven fabric in which fibers are woven in two dimensions or three dimensions, or the like.

The fiber diameter, or the like of the carbon fibers is not particularly limited, and may be selected according to the application of the resin molded body or the like.

However, since a resin molded body excellent in flexural modulus can be obtained even if the fiber length of the carbon fibers is short, the average fiber length of the carbon fibers is 0.1 mm to 5.0 mm (preferably 0.2 mm to 2.0 mm).

In addition, the average diameter of the carbon fibers may be, for example, 5.0 $\mu$m to 10.0 $\mu$m (preferably 6.0 $\mu$m to 8.0 $\mu$m).

Here, a method for measuring the average fiber length of the carbon fibers is as follows. The carbon fibers are observed with an optical microscope at a magnification of 100 and the length of the carbon fibers is measured. Then, this measurement is performed on 200 carbon fibers, and the average value thereof is taken as the average fiber length of the carbon fibers.

Here, a method for measuring the average diameter of the carbon fibers is as follows. A section orthogonal to the longitudinal direction of the carbon fibers is observed with a SEM (scanning electron microscope) at a magnification of 1000 times, and the diameters of the carbon fibers are measured. Then, this measurement is performed on 100 carbon fibers, and the average value thereof is taken as the average diameter of the carbon fibers.

A commercially available product may be used as the carbon fiber.

Examples of commercially available products of the PAN-based carbon fiber include "Torayca (registered trademark)" manufactured by Toray Industries, Inc., "Tenax" manufactured by Toho Tenax Co., Ltd., and "Pyrofil (registered trademark)" manufactured by Mitsubishi Rayon Co., Ltd. Other commercially available products of the PAN-based carbon fiber include commercial products manufactured by Hexcel, Cytec, Dow-Aksa, Taiwan Plastic, and SGL.

Examples of commercially available products of the pitch-based carbon fiber include "DIALEAD (registered trademark)" manufactured by Mitsubishi Rayon Co., Ltd., "GRANOC" manufactured by Nippon Graphite Fiber Co., Ltd., and "KRECA" manufactured by Kureha Corporation. Other commercially available products of the pitch-based carbon fiber include commercially available products manufactured by Osaka Gas Chemicals Co., Ltd and Cytec Industries.

The carbon fiber may be used alone, or may be used in combination of two or more thereof.

The content of the carbon fibers is preferably 0.1 part by mass to 200 parts by mass, more preferably 1 part by mass to 180 parts by mass, and still more preferably 5 parts by mass to 150 parts by mass, with respect to 100 parts by mass of the thermoplastic resin.

When the content of the carbon fibers is 0.1 part by mass or more with respect to 100 parts by mass of the thermoplastic resin, reinforcement of the resin composition is achieved; when the content of the carbon fibers is 200 parts by mass or less with respect to 100 parts by mass of the thermoplastic resin, the moldability at the time of obtaining the resin molded body is improved.

Here, the content (parts by mass) with respect to 100 parts by mass of the thermoplastic resin is sometimes abbreviated as "phr (per hundred resin)".

When this abbreviation is used, the content of the carbon fibers is 0.1 phr to 200 phr.

-Glass Fibers-

Known glass fibers are used as the glass fibers.

Both short fibers and long fibers can be used as the glass fibers, but those having short fibers are preferably used.

Further, the material of the glass fibers are not particularly limited, and examples thereof include S glass, E glass, C glass, AR glass or the like. For abbreviations of the S glass or the like, reference is made to JIS R 3410-2006.

The glass fibers may be one subjected to known surface treatment.

Examples of the surface treatment for the glass fibers include surface treatment with a coupling agent, a film former, a lubricant, and other surface treatment agents. Examples of the coupling agent include a silane coupling agent.

The form of the glass fibers is not particularly limited, and may be selected according to the application of the resin molded body or the like. Examples of the form of the glass fibers include a fiber bundle composed of a large number of single fibers, a bundled fiber bundle, a woven fabric in which fibers are woven in two dimensions or three dimensions, or the like.

The fiber diameter, fiber length, and the like of the glass fibers are not particularly limited, and may be selected according to the application of the resin molded body or the like.

However, since, similar to the above-mentioned carbon fibers, a resin molded body excellent in flexural modulus can be obtained even if the fiber length of the glass fibers is short, the average fiber length of the glass fibers is 0.1 mm to 2.0 mm (preferably 0.2 mm to 1.0 mm).

In addition, the average diameter of the glass fibers may be, for example, 1 $\mu$m to 50 $\mu$m (preferably 3 $\mu$m to 30 $\mu$m).

The average fiber length and the average diameter of the glass fibers are measured by the same method as the above-mentioned method of measuring the average fiber length and the average diameter of the carbon fibers.

When the fiber length of the carbon fibers and the glass fibers (reinforcing fibers) is shortened, the resin reinforcing ability of the reinforcing fibers tends to decrease. Particularly, due to recent demands for recycling, it is also being promoted to crush and recycle a resin molded body reinforced with reinforcing fibers, and the fiber length of the reinforcing fibers is often shortened when crushing the resin molded body. In addition, the fiber length of the reinforcing fibers may be shortened during heat-melt-kneading in producing the resin composition. Therefore, when a resin molded body is molded from a resin composition containing reinforcing fibers whose fiber length is shortened, the mechanical strength, particularly the flexural modulus, may tend to decrease.

However, even if a resin molded body containing reinforcing fibers is pulverized and a recycled product in which reinforcing fibers are made into short fibers is used as a raw material or reinforcing fibers are made short fibers during heat-melt-kneading, the resin composition according to the present embodiment is useful because a resin molded body having excellent flexural modulus can be obtained.

A commercially available product may be used as the glass fibers.

Examples of commercial products of glass fiber include commercially available products of Nitto Boseki Co., Ltd., manufactured by Central Glass Co., Ltd., Asahi Fiber Glass Co., Ltd., Nippon Sheet Glass Company, Ltd, Unitika Ltd., Nippon Electric Glass Co., Ltd., or the like.

The glass fiber may be used alone, or may be used in combination of two or more types thereof.

The content of the glass fibers is preferably 0.1 part by mass to 200 parts by mass, more preferably 1 part by mass to 180 parts by mass, and still more preferably 5 parts by mass to 150 parts by mass, with respect to 100 parts by mass of the thermoplastic resin.

When the content of the glass fibers is 0.1 part by mass or more with respect to 100 parts by mass of the thermoplastic resin, reinforcement of the resin composition is achieved; when the content of the glass fibers is 200 parts by mass or less with respect to 100 parts by mass of the thermoplastic resin, the moldability at the time of obtaining the resin molded body is improved.

In the resin composition according to the present embodiment, from the viewpoints of the toughness and flexural modulus of the obtained resin molded body, the mass ratio ($W^C/W^G$) of the content $W^C$ of the carbon fibers to the content $W^G$ of the glass fibers is preferably 0.01 to 100, more preferably 0.1 to 10, and particularly preferably 0.5 to 5.

Further, in the resin composition according to the present embodiment, from the viewpoints of the toughness and flexural modulus of the obtained resin molded body, a ratio ($D^C/D^G$) of the average diameter $D^C$ of the carbon fibers to the average diameter $D^G$ of the glass fibers is preferably 0.01 to 100, more preferably 0.05 to 95, and particularly preferably 0.05 to 90.

-Polyamide (Specific Resin)-

The specific resin includes a specific partial structure and is a resin that can cover the periphery of the carbon fibers and the glass fibers (reinforcing fibers) as described above.

The specific resin is described in detail.

The specific resin is preferably a resin having a low compatibility with the thermoplastic resin, specifically, a resin having a different solubility parameter (SP value) from that of the thermoplastic resin.

Here, a difference in SP value between the thermoplastic resin and the specific resin is preferably 3 or more, and more preferably 3 to 6, from the viewpoint of compatibility between the thermoplastic resin and specific resin and repulsive force therebetween.

The SP value here is a value calculated by the Fedor's method. Specifically, the solubility parameter (SP value) is calculated according to the description of, for example, Polym. Eng. Sci., Vol. 14, p. 147 (1974) by the following equation.

$$\text{Equation: SP value} = \sqrt{(Ev/v)} = \sqrt{(\Sigma\Delta ei/\Sigma\Delta vi)}$$

(in the Equation, Ev: vaporization energy (cal/mol), v: molar volume ($cm^3$/mol), $\Delta$ei: evaporation energy of each atom or atomic group, and $\Delta$vi: molar volume of each atom or atomic group)

The solubility parameter (SP value) adopts ($cal/cm^3$)$^{1/2}$ as a unit, but the unit is omitted according to the practice and the notation is expressed in dimensionless.

In addition, the specific resin is a polyamide (PA).

When an imide bond or an amide bond is contained, the affinity is exhibited with the polar group present on the surface of the reinforcing fibers.

Since the specific resin has low compatibility with the thermoplastic resin and the SP value is preferably different, it is preferable to use a thermoplastic resin different from the thermoplastic resin as a base material.

A polyamide (PA) is preferred from the viewpoints of further improvement of the flexural modulus and excellent adhesion to the reinforcing fibers.

Examples of the polyamide include a polyamide obtained by co-polycondensation of a dicarboxylic acid and a diamine, a polyamide obtained by ring-opening polycondensation of lactam, and a polyamide obtained by condensation of a dicarboxylic acid, a diamine and a lactam. That is, examples of the polyamide include a polyamide having at least one of a structural unit in which a dicarboxylic acid and a diamine are condensation-polymerized and a structural unit in which a lactam is ring-opened.

The polyamideis a polyamide having a structural unit containing an aromatic ring other than an aramid; a polyamide having a structural unit not containing an aromatic ring; and a polyamide having a structural unit containing an aromatic ring other than an aramid structural unit and a structural unit not containing an aromatic ring. From the viewpoint of improvement of the flexural modulus, the polyamide is preferably a polyamide having a structural unit containing an aromatic ring other than an aramid structural unit and a structural unit not containing an aromatic ring.

Particularly, when a polyamide having a structural unit containing an aromatic ring other than an aramid structural unit and a structural unit not containing an aromatic ring is applied, the reinforcing fibers and the thermoplastic resin have a good affinity with each other. Here, a polyamide only having a structural unit containing an aromatic ring tends to have a higher affinity for the reinforcing fibers and a lower affinity for the thermoplastic resin, compared with a polyamide only having a structural unit not containing an aromatic ring. The polyamide only having a structural unit not containing an aromatic ring tends to have a lower affinity for the reinforcing fibers and a higher affinity for the thermoplastic resin, compared with a polyamide only having a structural unit containing an aromatic ring. Therefore, by applying the polyamide having both structural units, the affinity between the reinforcing fibers and the thermoplastic resin is improved, and the adhesion of the interface between the reinforcing fibers and the thermoplastic resin is further enhanced by the coating layer of the polyamide. Therefore, a resin molded body excellent in mechanical strength, particularly the flexural modulus is easily obtained.

In addition, when the polyamide having a structural unit containing an aromatic ring other than an aramid structural unit and a structural unit not containing an aromatic ring is applied as the polyamide, the melt viscosity is lowered, and the moldability (for example, injection moldability) is also improved. Therefore, a resin molded body having high appearance quality can be easily obtained.

When a polyamide only having an aramid structural unit is applied as the polyamide, thermal degradation of the thermoplastic resin is caused at a high temperature at which the polyamide can melt. In addition, at a temperature at which the thermal degradation of the thermoplastic resin is caused, the polyamide can sufficiently melt, the moldability (for example, injection moldability) is deteriorated, and the appearance quality and the mechanical performance of the obtained resin molded body are lowered.

The aromatic ring refers to a monocyclic aromatic ring (cyclopentadiene and benzene) having 5 or more membered rings and a condensed ring (such as naphthalene) condensed with a plurality of monocyclic aromatic rings having 5 or more member rings. The aromatic ring also includes a heterocyclic ring (such as a pyridine ring).

The aramid structural unit refers to a structural unit obtained by polycondensation reaction between a dicarboxylic acid containing an aromatic ring and a diamine containing an aromatic ring.

Here, examples of the structural unit containing an aromatic ring other than an aramid structural unit include at least one of the following structural units (1) and (2).

• Structural unit (1): -(-NH-Ar$^1$-NH-CO-R$^1$-CO-)-
(In the structural unit (1), Ar$^1$ represents a divalent organic group containing an aromatic ring. R$^1$ represents a divalent organic group not containing an aromatic ring.)
• Structural unit (2): -(-NH-R$^2$-NH-CO-Ar$^2$-CO-)-
(In the structural unit (2), Ar$^2$ represents a divalent organic group containing an aromatic ring. R$^2$ represents a divalent organic group not containing an aromatic ring.)

On the other hand, examples of the structural unit not containing an aromatic ring include at least one of the following structural units (3) and (4).

• Structural unit (3): -(-NH-R$^{31}$-NH-CO-R$^{32}$-CO-)-
(In the structural unit (3), R$^{31}$ represents a divalent organic group not containing an aromatic ring. R$^{32}$ represents a divalent organic group not containing an aromatic ring.)
• Structural unit (4): -(-NH-R$^4$-CO-)-
(In the structural unit (4), R$^4$ represents a divalent organic group not containing an aromatic ring.)

In the structural formulas (1) to (3), the "divalent organic group" indicated by each symbol is an organic group derived from a divalent organic group of a dicarboxylic acid, a diamine, or a lactam. Specifically, for example, in the structural unit (1), the "divalent organic group containing an aromatic ring" represented by Ar$^1$ represents a residue obtained by removing two amino groups from a diamine, and the "divalent organic group not containing an aromatic ring" represented by R$^1$ represents a residue obtained by removing two carboxy groups from a dicarboxylic acid. For example, in the structural unit (4), the "divalent organic group not containing an aromatic ring" represented by R$^4$ represents an organic group sandwiched between the "NH group" and the "CO group" when the lactam is ring-opened.

As the polyamide, any of a copolymerized polyamide and a mixed polyamide may be used. As the polyamide, a copolymerized polyamide and a mixed polyamide may be used in combination. Of these, the mixed polyamide is preferred as the polyamide from the viewpoint of further improvement of the flexural modulus.

The copolymerized polyamide is, for example, a copolymerized polyamide obtained by copolymerizing a first polyamide having a structural unit containing an aromatic ring other than an aramid structural unit and a second polyamide having a structural unit not containing an aromatic ring.

The mixed polyamide is, for example, a mixture of polyamides containing a first polyamide containing an aromatic ring and a second polyamide not containing an aromatic ring.

Hereinafter, the first polyamide may be referred to as an "aromatic polyamide" and the second polyamide as an "aliphatic polyamide", for convenience.

In the copolymerized polyamide, the ratio of the aromatic polyamide to the aliphatic polyamide (aromatic polyamide/aliphatic polyamide) is preferably 20/80 to 99/1 (preferably 50/50 to 96/4) by mass ratio from the viewpoint of further improvement of the flexural modulus.

On the other hand, in the mixed polyamide, the ratio of the aromatic polyamide to the aliphatic polyamide (aromatic polyamide/aliphatic polyamide) is preferably 20/80 to 99/1 (preferably 50/50 to 96/4) by mass ratio from the viewpoint of further improvement of the flexural modulus.

In the aromatic polyamide, the proportion of the structural unit containing an aromatic ring is preferably 80 mass% or more (preferably 90 mass% or more, and more preferably 100 mass% or more) with respect to the whole structural units.

On the other hand, in the aliphatic polyamide, the proportion of the structural unit not containing an aromatic ring is preferably 80 mass% or more (preferably 90 mass% or more, and more preferably 100 mass% or more) with respect to the whole structural units.

Examples of the aromatic polyamide include a condensation polymer of a dicarboxylic acid containing an aromatic ring and a diamine not containing an aromatic ring, a condensation polymer of a dicarboxylic acid not containing an aromatic ring and a diamine containing an aromatic ring, or the like.

Examples of the aliphatic polyamide include a condensation polymer of a dicarboxylic acid not containing an aromatic ring and a diamine not containing an aromatic ring, a ring-opening polycondensate of a lactam not containing an aromatic ring, or the like.

Here, examples of the dicarboxylic acid containing an aromatic ring include a phthalic acid (such as terephthalic acid and isophthalic acid), a biphenyldicarboxylic acid, or the like.

Examples of the dicarboxylic acid not containing an aromatic ring include oxalic acid, adipic acid, suberic acid, sebacic acid, 1,4-cyclohexanedicarboxylic acid, malonic acid, succinic acid, glutaric acid, pimelic acid, azelaic acid, or the like.

Examples of the diamine containing an aromatic ring include p-phenylenediamine, m-phenylenediamine, m-xylenediamine, diaminodiphenylmethane, diaminodiphenyl ether, or the like.

Examples of the diamine not containing an aromatic ring include ethylenediamine, pentamethylenediamine, hexamethylenediamine, nonanediamine, decamethylenediamine, 1,4-cyclohexanediamine, or the like.

Examples of the lactam not containing an aromatic ring include ε-caprolactam, undecane lactam, lauryl lactam, or the like.

Each dicarboxylic acid, each diamine, and each lactam may be used alone or in combination of two or more kinds thereof.

Examples of the aromatic polyamide include MXD 6 (a condensation polymer of adipic acid and meta-xylenediamine), nylon 6T (a condensation polymer of terephthalic acid and hexamethylenediamine), nylon 6I (a polycondensate of isophthalic acid and hexamethylenediamine), Nylon 9T (a polycondensate of terephthalic acid and nandiamine), nylon M5T (a polycondensate of terephthalic acid and methylpentadiamine), or the like.

Examples of commercially available products of the aromatic polyamide include "MXD 6" manufactured by Mitsubishi Gas Chemical Company, Inc., "GENESTAR (registered trademark): PA 6T" manufactured by KURARAY CO., LTD., "GENESTAR (registered trademark): PA 9T" manufactured by KURARAY CO., LTD., "TY-502NZ: PA 6T" manufactured by TOYOBO CO., LTD., or the like.

Examples of the aliphatic polyamide include nylon 6 (a ring-opening polycondensate of ε-caprolactam), nylon 11 (a ring-opening polycondensate of undecane lactam), nylon 12 (a ring-opening polycondensate of lauryl lactam), nylon 66 (a condensation polymer of adipic acid and hexamethylenediamine), nylon 610 (a condensation polymer of sebacic acid and hexamethylenediamine), or the like.

Examples of commercially available products of the aliphatic polyamide include "Zytel (registered trademark): 7331J (PA 6)" manufactured by Dupont, "Zytel (registered trademark): 101L (PA 66)" manufactured by Dupont, or the like.

The proportion of the aromatic ring in the polyamide (the copolymerized polyamide and the mixed polyamide) is preferably 1 mass% to 55 mass%, more preferably 5 mass% to 50 mass% and even more preferably from 10 mass% to 40 mass%, from the viewpoint of further improvement of the flexural modulus.

The proportion of the aromatic ring in the mixed polyamide is a proportion of the aromatic ring with respect to the aromatic polyamide and the aliphatic polyamide as a whole.

Here, the proportion of the aromatic ring in the polyamide means the total proportion of "a monocyclic aromatic ring and a condensed ring formed by condensation of a monocyclic aromatic ring" contained in the polyamide. In calculation of the proportion of the aromatic ring in the polyamide, a substituent substituted on a monocyclic aromatic ring or a condensed ring formed by condensation of a monocyclic aromatic ring is excluded.

That is, the proportion of the aromatic ring in the polyamide is calculated from the molecular weight of the "structural unit obtained by polycondensation of a dicarboxylic acid and a diamine" of the polyamide, or of the "structural unit which has a ring-opened lactam" as a proportion (mass%) of the molecular weight of the aromatic ring (in a case of having a substituent, the aromatic ring excluding the substituent) contained in the structural unit.

First, the proportion of the aromatic ring in a representative polyamide is shown below. The proportion of the aromatic ring of nylon 6 and nylon 66 not containing an aromatic ring is 0 mass%. On the other hand, since MXD 6 having an aromatic ring has an aromatic ring "$-C_6H_4-$ (molecular weight of 76.10)" in the structural unit, the proportion of the aromatic ring is 30.9 mass%. Similarly, the proportion of the aromatic ring in nylon 9T is 26.4 mass%.

Nylon 6: structure of the structural unit "$-NH-(CH_2)_5-CO-$"; molecular weight of the structural unit = 113.16; proportion of the aromatic ring = 0 mass%

Nylon 66: structure of the structural unit "$-NH-(CH_2)_6-NH-CO-(CH_2)_4-CO-$"; molecular weight of the structural unit = 226.32; proportion of the aromatic ring = 0 mass%

MXD 6: structure of the structural unit "$-NH-CH_2-C_6H_4-CH_2-NH-CO-(CH_2)_4-CO-$"; molecular weight of the structural unit = 246.34; proportion of the aromatic ring = 30.9 mass%

Nylon 9T: structure of the structural unit "$-NH-(CH_2)_9-NH-CO-C_6H_4-CO-$"; molecular weight of the structural unit = 288.43; proportion of the aromatic ring = 26.4 mass%

The proportion of the aromatic ring in the copolymerized polyamide and the mixed polyamide is determined as follows.

- Example 1: in case of copolymerized polyamide or mixed polyamide of nylon 6 and MXD 6 (mass ratio of nylon 6 to MXD 6 = 50/50)-

$$\text{Proportion of aromatic ring} = (\text{proportion of nylon 6} \times \text{proportion of aromatic ring in nylon 6}) + (\text{proportion of MXD 6} \times \text{proportion of aromatic ring in MXD 6}) = (0.5 \times 0) + (0.5 \times 30.9) = 15.5 \text{ (mass\%)}$$

- Example 2: in case of copolymerized polyamide or mixed polyamide of nylon 66, MXD 6 and nylon 9T (mass ratio of nylon 66, MXD 6 and nylon 9T = 50/25/25)-

$$\text{Proportion of aromatic ring} = (\text{proportion of nylon 66} \times \text{proportion of aromatic ring in nylon 66}) + (\text{proportion of MXD 6} \times \text{proportion of aromatic ring in MXD 6}) + (\text{proportion of nylon 9T} \times \text{proportion of aromatic ring in nylon 9T}) = (0.5 \times 0.5 \times 0) + (0.25 \times 30.9) + (0.25 \times 26.4) = 14.3 \text{ (mass\%)}$$

Physical properties of the specific resin are described.

The molecular weight of the specific resin is not particularly limited as long as it is easier to thermally melt than the thermoplastic resin coexisting in the resin composition. For example, the weight average molecular weight of the polyamide is preferably in the range of 10,000 to 300,000, and more preferably in the range of 10,000 to 100,000.

In addition, similar to the above molecular weight, the glass transition temperature or the melting temperature (melting point) of the specific resin is not particularly limited, as long as it is easier to thermally melt than the thermoplastic resin coexisting in the resin composition. For example, the melting point (Tm) of the polyamide (each polyamide of a copolymerized polyamide and a mixed polyamide) is preferably in the range of 100°C to 400°C, and more preferably in the range of 150°C to 350°C.

From the viewpoint of further improvement of the flexural modulus, the content of the specific resin is preferably 0.1 part by mass to 100 parts by mass, more preferably 0.5 parts by mass to 90 parts by mass, and still more preferably 1 part by mass to 80 parts by mass, with respect to 100 parts by mass of the thermoplastic resin.

When the content of the polyamide is within the above range, the affinity with the reinforcing fibers is increased, and the flexural modulus is improved.

Particularly, when the specific resin is contained in a large amount within the range of more than 20 parts by mass and 100 parts by mass or less with respect to 100 parts by mass of the thermoplastic resin, the amount of the compatibilizer is relatively small with respect to the amount of the specific resin, the specific resin is difficult to spread in the thermoplastic resin, and the tendency to localize around the reinforcing fibers is enhanced. Accordingly, it is considered that the coating layer of the specific resin is formed in a state close to uniformity while thickening to some extent over the entire periphery of the reinforcing fibers having a short fiber length. Therefore, even if the fiber length of the reinforcing fibers is short, the adhesion at the interface between the reinforcing fibers and the thermoplastic resin is enhanced, and a resin molded body excellent in mechanical strength, particularly the flexural modulus, is easily obtained.

From the viewpoint of effectively manifesting the affinity with the reinforcing fibers, the content of the specific resin is preferably proportional to the content of the reinforcing fibers described above.

The content of the specific resin with respect to the total mass of the carbon fibers and the glass fibers is preferably 0.1 mass% to 1,000 mass%, more preferably 1 mass% to 150 mass%, and still more preferably 1 mass% to 120 mass%.

When the content of the specific resin with respect to the mass of the reinforcing fibers is 0.1 mass% or more, the affinity between the reinforcing fibers and the specific resin tends to be increased; when the content of the specific resin with respect to the mass of the carbon fibers is 1,000 mass% or less, the resin flowability is improved.

Here, the adhesion between the specific resin and the reinforcing fibers is evaluated by an index such as interfacial shear strength.

The interfacial shear strength is measured using a micro-droplet method. Here, the micro-droplet method is described with reference to the pattern diagram of the test shown in Fig. 2.

The micro-droplet method is a method of evaluating the interfacial adhesiveness between the polyamide and the carbon fiber by applying a liquid resin to a monofilament f, attaching a droplet D (also called a resin particle or resin bead), fixing the droplet D, and then conducting a drawing test for the single fiber f in the arrow direction.

Then, based on the test, the interfacial shear strength ($\tau$) is calculated using the following equation.

$$\tau = \frac{F}{d\pi L}$$

In the equation, $\tau$ represents interfacial shear strength, F represents a drawing load, d represents a fiber diameter of the single fiber, and L represents a droplet length.

It is an index indicating that the larger the value of the calculated interfacial shear strength ($\tau$) is, the higher the adhesion between the reinforcing fibers and the specific resin is. By selecting a combination of the reinforcing fibers and the resin having a large value, a resin molded body having a higher flexural modulus is formed.

-Compatibilizer-

The compatibilizer is a resin that enhances the affinity between the thermoplastic resin and the specific resin.

The compatibilizer may be determined according to the thermoplastic resin.

The compatibilizer is preferably one having the same structure as the thermoplastic resin and including a site having affinity with the specific resin in a part of the molecule. The site having affinity with the specific resin is, for example, a modification site containing a carboxy group, a carboxylic acid anhydride residue, a carboxylic acid ester residue, an imino group, an amino group, an epoxy group or the like. As the compatibilizer, a thermoplastic resin modified with the above-described modification site and having an affinity with the specific resin can be used.

Generally, in a case of using a polyolefin as the thermoplastic resin, a modified polyolefin may be used as the compatibilizer.

Generally, if the thermoplastic resin is a polypropylene (PP), a modified polypropylene (PP) is preferably used as the modified polyolefin, and similarly, if the thermoplastic resin is an ethylene-vinyl acetate copolymer resin (EVA), a modified ethylene-vinyl acetate copolymer resin (EVA) is preferably used as the modified polyolefin.

Examples of the modified polyolefin include a polyolefin into which a modification site including a carboxy group, a carboxylic acid anhydride residue, a carboxylic acid ester residue, an imino group, an amino group, an epoxy group or the like is introduced.

From the viewpoints of further improvement of the affinity between the polyolefin and the polyamide and the upper limit temperature during the molding process, the modification site introduced into the polyolefin contains a maleic anhydride residue.

Examples of the modification method for the modified polyolefin include a method of directly chemically bonding by reacting a compound containing the above-mentioned modification site with a polyolefin, a method of forming a graft chain using the above-mentioned compound containing a modification site and bonding the graft chain to a polyolefin, or the like.

A modified polyolefin obtained by reacting maleic anhydride which is an unsaturated carboxylic acid with a polyolefin is used.

Specific examples of the modified polyolefin include acid modified polyolefins such as a maleic anhydride modified polypropylene, a maleic anhydride modified polyethylene, a maleic anhydride modified ethylene vinyl acetate copolymer resin (EVA), and adducts or copolymerization thereof.

As the modified polyolefin, a commercially available product may be used.

Examples of the modified propylene include Yumex (registered trademark) series (100 TS, 110 TS, 1001, and 1010) manufactured by Sanyo Chemical Industries, Ltd., or the like.

Examples of the modified polyethylene include Yumex (registered trademark) series (2000) manufactured by Sanyo Chemical Industries, Ltd., MODIC (registered trademark) series manufactured by Mitsubishi Chemical Corporation, or the like.

Examples of the modified ethylene-vinyl acetate copolymer resin (EVA) include MODIC (registered trademark) series manufactured by Mitsubishi Chemical Corporation or the like.

The molecular weight of the compatibilizer is not particularly limited, and is preferably in the range of 5,000 to 100,000, and more preferably in the range of 5,000 to 80,000, from the viewpoint of processability.

The content of the compatibilizer is preferably 0.1 part by mass to 50 parts by mass, more preferably 0.1 part by mass to 40 parts by mass, and still more preferably 0.1 part by mass to 30 parts by mass, with respect to 100 parts by mass of the thermoplastic resin.

The content of the compatibilizer is preferably 1 part by mass to 50 parts by mass, more preferably 5 part by mass to 50 parts by mass, and still more preferably 10 parts by mass to 50 parts by mass, with respect to 100 parts by mass of the specific resin.

When the content of the compatibilizer is within the above range, the affinity between the thermoplastic resin and the specific resin is enhanced, and the flexural modulus is improved.

From the viewpoints of enhancing the affinity between the thermoplastic resin and the specific resin, the content of the compatibilizer is preferably proportional to the content of the specific resin (indirectly proportional to the content of the reinforcing fibers).

The content of the compatibilizer with respect to the total mass of the carbon fibers and the glass fibers is preferably 1 mass% to 50 mass%, more preferably 5 mass% to 40 mass%, and still more preferably 10 mass% to 30 mass%.

When the content of the compatibilizer with respect to the total mass of the carbon fibers and the glass fibers is 1 mass% or more, the affinity between the reinforcing fibers and the specific resin is easily obtained, and when the content of the compatibilizer with respect to the total mass of the carbon fibers and the glass fibers is 50 mass% or less (particularly 30 mass% or less), the residual unreacted functional groups which cause discoloration and deterioration are suppressed.

The resin composition according to the present embodiment is preferably a non-crosslinked resin composition in which the resin component constituting the resin composition is not crosslinked. When the resin component is crosslinked, the movement of the resin component in the resin composition is restricted, and it may be difficult to form a coating layer around the carbon fibers and the glass fibers.

-Other Components-

The resin composition according to the present embodiment may contain other components in addition to each of the above components.

Examples of other components include well-known additives such as a flame retardant, a flame retardant, a flame retardant aid, a sludge preventing agent when heated, a plasticizer, an antioxidant, a releasing agent, a light fastness agent, a weathering agent, a colorant, a pigment, a modifier, an antistatic agent, a hydrolysis inhibitor, a filler, and a reinforcing agent other than carbon fibers and glass fibers (talc, clay, mica, glass flakes, glass beads, crystalline silica, alumina, silicon nitride, aluminum nitride, boron nitride, etc.).

The content of the other components in the resin composition according to the present embodiment is preferably 0 part by mass to 10 parts by mass, and more preferably 0 part by mass to 5 parts by mass, with respect to 100 parts by mass of the thermoplastic resin, for example. Here, "0 part by mass" means a form not containing other components.

(Method for Producing Resin Composition)

The resin composition according to the present embodiment is produced by melt-kneading each of the above components.

Here, known means is used as means for melt kneading, and examples thereof include a twin-screw extruder, a Henschel mixer, a Banbury mixer, a single screw extruder, a multi-screw extruder, a co-kneader or the like.

The temperature at the time of melt-kneading (cylinder temperature) may be determined according to the melting point of the resin component constituting the resin composition or the like.

Particularly, the resin composition according to the present embodiment is preferably obtained by a production method including a step of melt-kneading a thermoplastic resin, carbon fibers, glass fibers, a specific resin, and a compatibilizer. When the thermoplastic resin, the carbon fibers, the glass fibers, the specific resin, and the compatibilizer are melt-kneaded all at once, a coating layer of the specific resin is easily formed around the reinforcing fibers in a thin and nearly uniform state, the reinforcing fibers are easily to be coordinated around the glass fibers, the fiber directions are more easily to be oriented, and the toughness and flexural modulus are enhanced.

[Resin Molded body]

The resin molded body according to the present embodiment contains a thermoplastic resin, carbon fibers, glass fibers, a specific resin, and a compatibilizer. That is, the resin molded body according to the present embodiment has the same composition as the resin composition according to the present embodiment.

The resin molded body according to the present embodiment is preferably a non-crosslinked resin molded body made of a non-crosslinked resin composition in which the resin component constituting the resin composition is not crosslinked. When the resin component is crosslinked, the movement of the resin component in the resin composition is restricted, and it may be difficult to form a coating layer around the carbon fibers and the glass fibers.

The resin molded body according to the present embodiment may be obtained by: preparing the resin composition according to the present embodiment; and molding the resin composition, or may be obtained by: preparing a composition containing components other than carbon fibers and the glass fibers; and mixing the composition and the glass fibers at the time of molding. In addition, the carbon fibers and the glass fibers may be simultaneously added or mixed, or may be added and mixed sequentially, and either the carbon fibers or the glass fibers may be added first and mixed.

As for the molding method, for example, injection molding, extrusion molding, blow molding, hot press molding, calender molding, coating molding, cast molding, dipping molding, vacuum molding, transfer molding and the like may be applied.

The method for forming a resin molded body according to the present embodiment is preferably injection molding from the viewpoint of a high degree of freedom of shape.

The cylinder temperature of the injection molding is, for example, preferably 180°C to 300°C, and more preferably 200°C to 280°C. The mold temperature of the injection molding is, for example, preferably 30°C to 100°C, and more preferably 30°C to 60°C.

Injection molding may be performed using commercially available devices such as NEX 150 manufactured by NISSEI PLASTIC INDUSTRIAL CO., LTD., NEX 300 manufactured by NISSEI PLASTIC INDUSTRIAL CO., LTD., and SE50D manufactured by Sumitomo Heavy Industries, Ltd., for example.

The resin molded body according to the present embodiment is suitably used for applications such as electronic and electrical equipment, office equipment, household electric appliances, automotive interior materials, containers, and the like. More specifically, casings of electronic and electric equipment and household electric appliances; various parts of electronic and electric equipment and household electrical appliances; interior parts of automobiles; storage cases of CD-ROM and DVD; dishes; beverage bottles; food trays; wrapping materials; films; sheets; or the like.

Particularly, since the resin molded body according to the present embodiment uses carbon fibers and glass fibers as the reinforcing fibers, a resin molded product more excellent in mechanical strength can be obtained. Therefore, the resin molded body is suitable for substitute application to metal parts.

Examples

The present invention will be specifically described below with reference to examples, but the present invention is not limited to these Examples.

[Examples 1 to 11 and Comparative Examples 1 to 6]

The components according to Table 1 or 2 (the numerical values in the table indicate the number of parts) were kneaded in a twin-screw kneader (TEM 26SS, manufactured by TOSHIBA MACHINE CO., LTD.) under the following kneading conditions and melt-kneading temperatures (cylinder temperatures) shown in Table 1 or 2, to obtain pellets of resin compositions. The obtained pellets were calcined at 600°C for 2 hours, and the average fiber length of the remaining carbon fibers and glass fibers was measured by the method described above. The measurement results are shown in Table 1 or 2.

-Molding Conditions-

- Screw diameter: φ 26 mm
- Rotation speed: 300 rpm
- Discharge nozzle diameter: 1 mm

The obtained pellets were molded into an ISO multipurpose dumbbell test piece (corresponding to ISO 178 bending test) (test part thickness of 4 mm and width of 10 mm) and a D2 test piece (length of 60 mm, width of 60 mm, and thickness of 2 mm) at the injection molding temperature (cylinder temperature) shown in Table 1 or 2 and the mold temperature of 50°C by an injection molding machine (NEX 150 manufactured by NISSEI PLASTIC INDUSTRIAL CO., LTD.).

[Evaluation]

The following evaluations were performed using the obtained two test pieces.
The evaluation results are shown in Table 1 or 2.

-Flexural Modulus-

With respect to the ISO multipurpose dumbbell test piece obtained, the flexural modulus was measured by a method complying with ISO 178 using a universal testing device (Autograph AG-Xplus, manufactured by Shimadzu Corporation).

-Elongation-

With respect to the ISO multipurpose dumbbell test piece obtained, the elongation was measured by a method according to ISO 527 using an evaluation device (precision universal testing machine Autograph AG-IS 5kN, manufactured by Shimadzu Corporation).

- Toughness-

Based on the flexural modulus and elongation values measured as described above, the value of (flexural

modulus) $\times$ (elongation) was taken as the toughness evaluation.

-Charpy at Low Temperature-Impact Strength (Impact Resistance at Low Temperature)-

With respect to the ISO multipurpose dumbbell test piece obtained, gates were formed on both sides in the longitudinal direction, and then notched processing was performed thereon. Then, the test piece was allowed to stand in a low temperature test chamber at -30°C for 24 hours and then the Charpy impact strength (kJ/m$^2$) thereof was measured by a Charpy impact test with an evaluation device (DG-UB2 manufactured by Toyo Seiki Seisaku-sho, Ltd.), in accordance with JIS-K 7111 (2006).

-Presence or Absence of Coating Layer-

Using the obtained D2 test piece, presence or absence of a coating layer of the specific resin was confirmed according to the method described above.

[Table 1]

| Example | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Compositions | Thermoplastic resin | Polypropylene | 50 | 50 | 50 | 50 | 50 | 50 | 50 | 50 | 50 | | 50 |
| | | Polyethylene | | | | | | | | | | 50 | |
| | Reinforcing fiber | Carbon fiber A (with surface treatment) | 1 | 100 | 20 | | 20 | 20 | 20 | 20 | 20 | 20 | 20 |
| | | Carbon fiber B (no surface treatment) | | | | 20 | | | | | | | |
| | | Glass fiber A | 100 | 1 | 20 | 20 | | | 20 | 20 | 20 | 20 | 20 |
| | | Glass fiber B | | | | | 20 | | | | | | |
| | | Glass fiber C | | | | | | 20 | | | | | |
| | Specific resin — Aliphatic PA | PA 6 | 30 | 30 | 30 | 30 | 30 | 30 | | | | 30 | |
| | | PA 66 | | | | | | | 30 | | | | 15 |
| | Specific resin — Aromatic PA | MXD 66 | | | | | | | | 30 | | | 15 |
| | | PA9T | | | | | | | | | 30 | | 5 |
| | Compatibilizer | Maleic anhydride modified polypropylene | 5 | 5 | 5 | 5 | 5 | 5 | 5 | 5 | 5 | | |
| | | Maleic anhydride modified polyethylene | | | | | | | | | | 5 | |
| | Total | | 186 | 186 | 125 | 125 | 125 | 125 | 125 | 125 | 125 | 125 | 125 |
| Mass ratio $W^C/W^G$ of content of carbon fibers to content of glass fibers | | | 0.01 | 100 | 1 | 1 | 1 | 1 | 1 | 1 | 1 | 1 | 1 |
| Conditions | Melt-kneading temperature (°C) | | 240 | 240 | 240 | 240 | 240 | 240 | 290 | 240 | 310 | 240 | 240 |
| | Injection molding temperature (°C) | | 240 | 240 | 240 | 240 | 240 | 240 | 290 | 240 | 310 | 240 | 240 |

EP 3 480 260 B1

19

(continued)

| | Example | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Properties | Tensile modulus (Gpa) | 15.0 | 31.0 | 26.0 | 27.0 | 25.0 | 25.0 | 32.0 | 33.0 | 34.0 | 15 | 28 |
| | Elongation (%) | 3.8 | 4.1 | 5.2 | 5.4 | 5.1 | 5.5 | 5.1 | 5.0 | 5.8 | 5.1 | 5.2 |
| | Toughness (flexural modulus × elongation) | 57.0 | 127.1 | 135.2 | 145.8 | 127.5 | 137.5 | 163.2 | 165.0 | 197.2 | 76.5 | 145.6 |
| | Charpy at -30°C - imapct (kJ/cm$^2$) | 47.0 | 32.0 | 35.0 | 36.0 | 35.0 | 34.0 | 38.0 | 31.0 | 36.0 | 51 | 35 |
| | Presence or absence of coating layer | Presence | Presence | Presence | Presence | Presence | Presence | Presence | Presence | Presence | Presence | Presence |
| | Average fiber length of carbon fibers (mm) | 0.2 | 0.2 | 0.2 | 0.2 | 0.2 | 0.2 | 0.2 | 0.2 | 0.2 | 0.2 | 0.2 |
| | Average fiber length of glass fibers (mm) | 0.3 | 0.3 | 0.3 | 0.3 | 0.3 | 0.3 | 0.3 | 0.3 | 0.3 | 0.3 | 0.3 |
| Each composition ratio | Part of carbon fibers (with respect to 100 parts of thermoplastic resin) | 2 | 200 | 40 | 40 | 40 | 40 | 40 | 40 | 40 | 40 | 40 |
| | Part of glass fibers (with respect to 100 parts of thermoplastic resin) | 200 | 2 | 40 | 40 | 40 | 40 | 40 | 40 | 40 | 40 | 40 |
| | Part of specific resin (with respect to 100 parts of thermoplastic resin) | 60 | 3000 | 150 | 150 | 150 | 60 | 150 | 150 | 150 | 150 | 175 |
| | Part of compatibilizer (with respect to 100 parts of thermoplastic resin) | 10 | 500 | 25 | 25 | 25 | 10 | 25 | 25 | 25 | 25 | 0 |
| | Mass% of specific resin (with respect to carbon fiber) | 3000 | 30 | 150 | 150 | 150 | 150 | 150 | 150 | 150 | 150 | 175 |
| | Part of compatibilizer (with respect to 100 parts of specific resin) | 16.7 | 16.7 | 16.7 | 16.7 | 16.7 | 16.7 | 16.7 | 16.7 | 16.7 | 16.7 | 0 |
| | Amount of carbon fibers in resin molded body (%) | 0.54 | 53.8 | 16.0 | 16.0 | 16.0 | 16.0 | 16.0 | 16.0 | 16.0 | 16.0 | 16.0 |
| | Amount of glass fibers in resin molded body (%) | 53.8 | 53.8 | 16.0 | 16.0 | 16.0 | 16.0 | 16.0 | 16.0 | 16.0 | 16.0 | 16.0 |

[Table 2]

| Comparative Examples | | | Comparative Example 1 | Comparative Example 2 | Comparative Example 3 | Comparative Example 4 | Comparative Example 5 | Comparative Example 6 |
|---|---|---|---|---|---|---|---|---|
| Compositions | Thermoplastic resin | Polypropylene | 50 | 50 | 50 | 50 | 50 | 50 |
| | Reinforcing fiber | Carbon fiber A (with surface treatment) | 1 | 100 | | | 20 | 20 |
| | | Glass fiber A | | | 1 | 100 | 20 | 20 |
| | Specific resin — Aliphatic PA | 30 | 30 | 30 | 30 | 30 | | |
| | Compatibilizer | Maleic anhydride modified polypropylene | 5 | 5 | 5 | 5 | | 5 |
| | Total | | 86 | 185 | 86 | 185 | 120 | 95 |
| Mass ratio $W^C/W^G$ of content of carbon fibers to content of glass fibers | | | - | - | 0 | 0 | 1 | 1 |
| Conditions | Melt-kneading temperature (°C) | | 240 | 240 | 240 | 240 | 240 | 240 |
| | Injection molding temperature (°C) | | 240 | 240 | 240 | 240 | 240 | 240 |
| Properties | Tensile modulus (Gpa) | | 3.2 | 30.0 | 3.0 | 11.0 | 5.8 | 12.5 |
| | Elongation (%) | | 6.2 | 0.3 | 7.2 | 0.1 | 0.5 | 0.4 |
| | Toughness (flexural modulus × elongation) | | 19.8 | 9.0 | 21.6 | 1.1 | 2.9 | 5.0 |
| | Charpy at -30°C - imapct (kJ/cm$^2$) | | 2.5 | 18.0 | 2.4 | 33.0 | 4.1 | 9.8 |
| | Presence or absence of coating laver | | Presence | Presence | Presence | Presence | Absence | Presence |
| | Average fiber length of carbon fibers (mm) | | 0.2 | 0.2 | 0.2 | 0.2 | 0.2 | 0.2 |
| | Average fiber length of glass fibers (mm) | | 0.3 | 0.3 | 0.3 | 0.3 | 0.3 | 0.3 |

(continued)

| Comparative Examples | | Comparative Example 1 | Comparative Example 2 | Comparative Example 3 | Comparative Example 4 | Comparative Example 5 | Comparative Example 6 |
|---|---|---|---|---|---|---|---|
| Each composition ratio | Part of carbon fibers (with respect to 100 parts of thermoplastic resin) | 2 | 200 | 0 | 0 | 40 | 40 |
| | Part of glass fibers (with respect to 100 parts of thermoplastic resin) | 0 | 0 | 2 | 200 | 40 | 40 |
| | Part of specific resin (with respect to 100 parts of thermoplastic resin) | 60 | 60 | 60 | 60 | 60 | 0 |
| | Part of compatibilizer (with respect to 100 parts of thermoplastic resin) | 10 | 10 | 10 | 10 | 0 | 10 |
| | Mass% of specific resin (with respect to carbon fiber) | 3000 | 30 | - | - | 150 | 0 |
| | Part of compatibilizer (with respect to 100 parts of specific resin) | 16.7 | 16.7 | 16.7 | 16.7 | 0 | - |
| | Amount of carbon fibers in resin molded body (%) | 1.16 | 54 | 0 | 0 | 16.7 | 21.1 |
| | Amount of glass fibers in resin molded body (%) | 0 | 54 | 0 | 0 | 16.7 | 21.1 |

Details of the types of the materials listed in Tables 1 and 2 are as follows.

-Thermoplastic Resin-

• Polypropylene (Novatec (registered trademark) PP MA3, manufactured by Japan Polypropylene Corporation)
• Polyethylene (ULTZEX 20100J, manufactured by Prime Polymer Co., Ltd.)

-Reinforcing Fibers-

• Carbon fiber A (with surface treatment, chopped carbon fiber Torayca (registered trademark), manufactured by Toray Industries, Inc.; average fiber length of 20 mm, and average diameter of 7 $\mu$m)
• Carbon fiber B (no surface treatment, with the above chopped carbon fiber tracer (registered trademark) dipping in a solvent to remove a sizing agent)
• Glass fiber A (surface treatment: silane coupling agent treated, Product name: CS3PE451S, manufacturer: Nitto Boseki Co., Ltd., average fiber length of 3 mm, average diameter of 13 $\mu$m)
Glass fiber B (surface treatment: silane coupling agent treated, Product name CS3PE960S, manufacturer: Nitto Boseki Co., Ltd., average fiber length of 3 mm, average diameter of 13 $\mu$m)
• Glass fiber C (Product name: GP024, manufacturer: Owens Corning Japan LLC, average fiber length of 6 mm, average diameter of 13 $\mu$m)

-Specific Resin: Aliphatic PA (Aliphatic Polyamide)-

• PA 6 (Nylon 6, Zytel (registered trademark) 7331J, manufactured by Dupont)
• PA 66 (Nylon 66, 101L, manufactured by Dupont)

-Specific Resin: Aromatic PA (Aromatic Polyamide)-

MXD 6 (MXD 6, manufactured by Mitsubishi Gas Chemical Company, Inc.)
• PA 9T (Nylon 9T, GENESTAR PA 9T, manufactured by KURARAY CO., LTD.)

- Compatibilizer-

• Maleic anhydride modified polypropylene (Yumex (registered trademark) 110 TS, manufactured by Sanyo Chemical Industries, Ltd.)
• Maleic anhydride modified polyethylene (MODIC M142 manufactured by Mitsubishi Chemical Corporation)
• Maleic anhydride modified EVA: maleic anhydride modified ethylene
• Vinyl acetate copolymer resin (MODIC A543, manufactured by Mitsubishi Chemical Corporation)

It is understood from the above results that, in the present example, a resin molded body excellent both in toughness and flexural modulus can be obtained as compared with the comparative example.
It is also understood that, in the present example, a resin molded body excellent also in low temperature impact resistance can be obtained.
When the molded body produced in each Example was analyzed by the method described above, it was confirmed that a layer of the compatibilizer used (a layer of the maleic anhydride modified polypropylene, a layer of the maleic anhydride modified polyethylene, or a layer of the maleic anhydride modified ethylene-vinyl acetate copolymer resin (EVA)) was interposed between the coating layer around the carbon fibers and the thermoplastic resin (a layer of the compatibilizer is formed on the surface of the coating layer).

**Claims**

1. A resin composition comprising:

   a thermoplastic resin being a polyethylene or polypropylene;
   carbon fibers;
   glass fibers;
   a polyamide; and
   a compatibilizer being a polyolefin modified with maleic anhydride;
   wherein an average fiber length of the carbon fibers is 0.1 mm to 5.0 mm;
   the polyamide is a polyamide having a structural unit containing an aromatic ring other than an aramid, a polyamide having a structural unit not containing an aromatic ring, or a polyamide having a structural unit containing an aromatic ring other than an aramid structural unit and a structural unit not containing an aromatic ring; and
   a content of the polyamide is 0.1 part by mass to 100 parts by mass with respect to 100 parts by mass of the thermoplastic resin.

2. The resin composition according to claim 1,
   wherein a mass ratio $W^C/W^G$ of a content $W^C$ of the carbon fibers to a content $W^G$ of the glass fibers is 0.01 to 100.

3. The resin composition according to claim 1,
   wherein a content of the carbon fibers is 0.1 part by mass to 200 parts by mass with respect to 100 parts by mass of the thermoplastic resin.

4. The resin composition according to claim 1,
   wherein a content of the glass fibers is 0.1 part by mass to 200 parts by mass with respect to 100 parts by mass of the thermoplastic resin.

5. The resin composition according to claim 1,
   wherein an average fiber length of the glass fibers is 0.1 mm to 2.0 mm.

6. The resin composition according to claim 1,
   wherein a content of the compatibilizer is 0.1 part by mass to 50 parts by mass with respect to 100 parts by mass of the thermoplastic resin.

7. The resin composition according to claim 1,
   wherein the content of the polyamide is 0.1 mass% to 1,000 mass% with respect to a total mass of the carbon fibers and the glass fibers.

8. The resin composition according to claim 1,
   wherein the content of the compatibilizer is 1 mass% to 50 mass% with respect to the total mass of the carbon fibers and the glass fibers.

9. A resin molded body, comprising the resin composition according to any one of claims 1 to 8.

**Patentansprüche**

1. Harzzusammensetzung, umfassend:

   einen thermoplastischen Kunststoff, der ein Polyethylen oder Polypropylen ist;
   Kohlenstofffasern;
   Glasfasern;
   ein Polyamid; und
   einen Kompatibilisator, der ein mit Maleinsäureanhydrid modifiziertes Polyolefin ist;
   wobei eine durchschnittliche Faserlänge der Kohlenstofffasern 0,1 mm bis 5,0 mm ist;
   das Polyamid ein Polyamid ist, das eine Struktureinheit aufweist, die einen aromatischen Ring enthält, der kein Aramid ist, ein Polyamid, das eine Struktureinheit aufweist, die keinen aromatischen Ring enthält, oder ein Polyamid, das eine Struktureinheit aufweist, die einen aromatischen Ring enthält, die keine Aramid-Struktureinheit ist, und eine Struktureinheit, die keinen aromatischen Ring enthält; und
ein Gehalt an Polyamid von 0,1 Masseteilen bis 100 Masseteilen, bezogen auf 100 Masseteile des thermoplastischen Harzes, ist.

2. Harzzusammensetzung gemäß Anspruch 1,
wobei ein Massenverhältnis $W^C/W^G$ eines Gehalts $W^C$ der Kohlenstofffasern zu einem Gehalt $W^G$ der Glasfasern 0,01 bis 100 ist.

3. Harzzusammensetzung gemäß Anspruch 1,
wobei ein Gehalt der Kohlenstofffasern 0,1 Masseteile bis 200 Masseteile, bezogen auf 100 Masseteile des thermoplastischen Harzes, ist.

4. Harzzusammensetzung gemäß Anspruch 1,
wobei ein Gehalt der Glasfasern 0,1 Masseteile bis 200 Masseteile, bezogen auf 100 Masseteile des thermoplastischen Harzes, ist.

5. Harzzusammensetzung gemäß Anspruch 1,
wobei eine durchschnittliche Faserlänge der Glasfasern 0,1 mm bis 2,0 mm ist.

6. Harzzusammensetzung gemäß Anspruch 1,
wobei ein Gehalt des Kompatibilisators 0,1 Masseteile bis 50 Masseteile, bezogen auf 100 Masseteile des thermoplastischen Harzes, ist.

7. Harzzusammensetzung gemäß Anspruch 1,
wobei der Gehalt des Polyamids 0,1 Masse-% bis 1000 Masse-% in Bezug auf die Gesamtmasse der Kohlenstofffasern und der Glasfasern ist.

8. Harzzusammensetzung gemäß Anspruch 1,
wobei der Gehalt des Kompatibilisators 1 Masse-% bis 50 Masse-% in Bezug auf die Gesamtmasse der Kohlenstofffasern und der Glasfasern ist.

9. Harzformkörper, umfassend die Harzzusammensetzung gemäß einem der Ansprüche 1 bis 8.

**Revendications**

1. Une composition de résine comprenant :

une résine thermoplastique qui est un polyéthylène ou un polypropylène ;
des fibres de carbone ;
des fibres de verre ;
un polyamide; et
un agent de compatibilité qui est une polyoléfine modifiée avec de l'anhydride maléique ;
dans laquelle une longueur moyenne de fibre des fibres de carbone est de 0,1 mm à 5,0 mm ;
le polyamide est un polyamide ayant une unité structurelle contenant un noyau aromatique autre qu'un aramide, un polyamide ayant une unité structurelle ne contenant pas de noyau aromatique, ou un polyamide ayant une unité structurelle contenant un noyau aromatique autre qu'une unité structurelle aramide et une unité structurelle ne contenant pas de noyau aromatique ; et
une teneur en polyamide est de 0,1 partie en masse à 100 parties en masse par rapport à 100 parties en masse de la résine thermoplastique.

2. La composition de résine selon la revendication 1,
dans laquelle un rapport massique $W^C/W^G$ d'une teneur $W^C$ en fibres de carbone à une teneur $W^G$ en fibres de verre est de 0,01 à 100.

3. La composition de résine selon la revendication 1,
dans laquelle une teneur en fibres de carbone est de 0,1 partie en masse à 200 parties en masse par rapport à 100 parties en masse de la résine thermoplastique.

4. La composition de résine selon la revendication 1,
dans laquelle une teneur en fibres de verre est de 0,1 partie en masse à 200 parties en masse par rapport à 100 parties en masse de la résine thermoplastique.

5. La composition de résine selon la revendication 1,
dans laquelle une longueur moyenne de fibre des fibres de verre est de 0,1 mm à 2,0 mm.

6. La composition de résine selon la revendication 1,
dans laquelle une teneur en agent de compatibilité est de 0,1 partie en masse à 50 parties en masse par rapport à 100 parties en masse de la résine thermoplastique.

7. La composition de résine selon la revendication 1,
dans laquelle la teneur en polyamide est de 0,1 % en masse à 1000 % en masse par rapport à la masse totale des fibres de carbone et des fibres de verre.

8. La composition de résine selon la revendication 1,
dans laquelle la teneur en agent de compatibilité est de 1 % en masse à 50 % en masse par rapport à la masse totale des fibres de carbone et des fibres de verre.

9. Un corps moulé en résine, comprenant la composition de résine selon l'une quelconque des revendications 1 à 8.

# FIG.1

PP

CA

CL

CF

# FIG.2

L

F

f

D

d

**REFERENCES CITED IN THE DESCRIPTION**

**Patent documents cited in the description**

- JP 2003528956 T
- JP 2014181307 A
- JP 2000071245 A
- JP 2016138163 A

**Non-patent literature cited in the description**

- *Polym. Eng. Sci.,* 1974, vol. 14, 147